# EUROPÄISCHE PATENTSCHRIFT

(11) **EP 1 944 235 B1**
(45) Veröffentlichungstag und Bekanntmachung des Hinweises auf die Patenterteilung: **04.08.2010**
(21) Anmeldenummer: 07023898.5
(22) Anmeldetag: 10.12.2007
(51) Int. Cl.: B64D 13/00, F24F 13/04, B01F 5/04

(54) **Mischvorrichtung für Flugzeugklimaanlage**
Mixing device for aircraft air-conditioning system
Dispositif de mélange pour installation de climatisation d'avion

(30) Priorität: 15.01.2007 DE 102007002138
(43) Veröffentlichungstag der Anmeldung: 16.07.2008
(73) Patentinhaber: Liebherr-Aerospace Lindenberg GmbH, 88161 Lindenberg/Allgäu (DE)
(72) Erfinder: Feisthammel, Horst, 88662 Überlingen (DE); Plogmann, Benjamin, 89188 Merklingen (DE)
(74) Vertreter: Laufhütte, Dieter

(56) Entgegenhaltungen:
- EP-A- 0 260 736
- FR-A- 959 794
- FR-A- 1 261 312
- US-A- 6 139 425
- US-A1- 2005 061 913

## Beschreibung

Die Erfindung betrifft eine Mischvorrichtung für eine Flugzeugklimaanlage nach dem Oberbegriff des Anspruchs 1.

Flugzeugklimaanlagen dienen zur Bereitstellung von klimatisierter Luft für die verschiedenen Bereiche des Flugzeuges, beispielsweise für die Flugzeugkabine oder für das Cockpit.

Die vorliegende Erfindung betrifft nun im speziellen ein Bauteil zur Mischung und/oder Aufteilung verschiedener Luftströme. Dabei wird Frischluft von der Klimaanlage mit Luft aus der Flugzeugkabine gemischt und wieder über ein Verteilsystem der Kabine zugeführt. Gleichzeitig wird gemäß einer Ausführungsform der Erfindung ein Teil der Frischluft abgezweigt, um diese dem Cockpit zuzuführen.

Unter normalen Umständen ergibt sich das Problem, dass sämtliche Bauteile, die in die Strömung ragen unter Betriebsbedingungen, in denen die Luft sehr kalt und mit Feuchte gesättigt ist, vereisen.

Um dieses Problem zu lösen, ist es bereits aus der U.S. 6,971,607 B2 bekannt geworden, eine erste Zuführleitung für Frischluft von der Klimaanlage in ihrem Endbereich von einer zweiten Zuführleitung für zurückgeführte Luft aus der Flugzeugkabine umschlossen ist, wobei beide Zuführleitungen in eine Abführleitung zur Zuführung gemischter Luft in die Flugzeugkabine münden. Damit umgibt vergleichsweise warme zurückgeführte Luft aus der Flugzeugkabine die kalte aus der Klimaanlage strömende Frischluft, so dass Vereisungen aufgrund des Wärmeübergangs von der warmen Luft verhindert werden können. Von der ersten Zuführleitung für Frischluft von der Klimaanlage zweigt noch die Abführleitung zur Zuführung von Frischluft in das Cockpit ab. Hierdurch ergibt sich ein sehr komplexes Bauteil für die Mischkammer.

Die EP 0 260 736 A1 offenbart ein Verfahren zur Mischung von zwei oder mehreren Gasströmen. Dabei wird ein Gasstrom einer ersten Zuführleitung mit dem Gasstrom einer zweiten Zuführleitung gemischt und der gemischte Gasstrom in einer einzigen Abführleitung ausgegeben.

Gleiches gilt für die Druckschriften US 6,139,425, FR 1,261,312 und FR 959,794, die eine Vorrichtung bzw. ein Verfahren darstellen, bei dem ein oder mehrere Gasströme über eine bzw. mehrere Zuführleitungen zu einer Mischvorrichtung zugeführt werden und im Anschluß ein gemischter Gasstrom aus einer einzigen Abführleitung der Mischvorrichtung ausgegeben wird.

Aufgabe der vorliegenden Erfindung ist es nun, eine Mischvorrichtung für eine Flugzeugklimaanlage der gattungsgemäßen Art bereitzustellen, die einerseits einfach aufgebaut ist und andererseits wirksam eine Vereisung im Betrieb verhindert.

Erfindungsgemäß ist diese Aufgabe durch eine Mischvorrichtung mit den Merkmalen des Anspruchs 1 gelöst.

Demnach weist eine Mischvorrichtung für eine Flugzeugklimaanlage eine erste Zuführleitung für Frischluft von der Klimaanlage und eine zweite Zuführleitung für zurückgeführte Luft aus der Flugzeugkabine auf, weiterhin ist eine Abführleitung zur Zuführung gemischter Luft in die Flugzeugkabine und eine Abführleitung zur Zuführung von Frischluft in das Cockpit vorhanden. Die Mischvorrichtung besteht erfindunsgemäß aus im Strömungsquerschnitt übereinander angeordneten Taschen, die zum einen Teil einen freien Querschnitt aufweisen, um die Frischluft von der Klimaanlage aus der ersten Zuführleitung für Frischluft von der Klimaanlage in die Abführleitung zur Zuführung von gemischter Luft in die Flugzeugkabine zu leiten und die zum anderen Teil eine diagonale Trennwand aufweisen, um sowohl die Frischluft von der Klimaanlage in die Abführleitung zur Zuführung von Frischluft in das Cockpit wie auch zurückgeführte Luft aus der Flugzeugkabine in die Abführleitung zur Zuführung von gemischter Luft in die Flugzeugkabine zu leiten. Grundsätzlich können statt der Flugzeugkabine und des Cockpits auch andere Bereiche des Flugzeugs mit der Mischvorrichtung verbunden sein.

Die erfindungsgemäße Mischvorrichtung besteht also aus mehreren Taschen, die mit einem diagonalen Trennblech versehen sind. Zwischen diesen Taschen sind wiederum Taschen angeordnet, durch die die Strömung ungehindert hindurchströmen kann. Durch die Taschen wird ein Teil der Frischluft, die auf die diagonalen Trennbleche strömt, seitlich abgelenkt. Gleichzeitig strömt auf der anderen Seite der Trennbleche die zirkulierte Luft aus der Flugzeugkabine zu und vermischt sich nach einer 90° Umlenkung mit der durch die offenen Taschen hindurchgetretenen Frischluft, wobei dieses Luftgemisch in die Abführleitung zur Zuführung gemischter Luft in die Flugzeugkabine fließt.

Diese Anordnung garantiert, dass die Taschen nicht vereisen, da sie durch die aus der Flugzeugkabine zurückgeführte Luft, das heißt die rezirkulierte Luft, beheizt werden. Gleichzeitig sorgen die Taschen dafür, dass durch die Scherströmung zwischen Frischluft und rezirkulierter Luft eine gute Vermischung nach dem Mischer stattfindet. Im nachgeschalteten Leitungssystem ist die Vereisungsproblematik damit gelöst. Aufgrund der Breite der Taschen kann der Volumenstrom eingestellt werden, der anteilig als Frischluft in Richtung Cockpit abgeführt wird.

Besondere Vorteile der Erfindung ergeben sich aus den sich aus den Unteransprüchen ergebenden weiteren Merkmale.

Demnach können die unterschiedlich aufgebauten Taschen vorzugsweise in mehreren Lagen abwechselnd übereinander angeordnet sein, so dass über die gesamte Höhe der Mischvorrichtung Wärme durch rezirkulierte Luft eingetragen wird.

Vorteilhaft können auch 10 bis 20 Taschen übereinander angeordnet sein, wodurch wiederum eine gleichmäßige Verteilung der durch die aus der Flugzeugkabine rezirkulierte Luft und damit des Wärmeeintrags ermöglicht wird.

Vorzugsweise können in die Abführleitung zur Zuführung von Frischluft in die Flugzeugkabine zusätzlich aus der Klimaanlage abgezweigte heiße Prozeßluft, sogenannte trim air zugemischt werden.

Gemäß einer weiteren vorteilhaften Ausgestaltung der Erfindung können die Taschen eine quadratische Grundfläche aufweisen. In einer anderen besonders vorteilhaften Ausgestaltung weisen die Taschen eine im wesentlichen dreieckige Grundfläche auf.

Vorteilhaft können die Taschen auch aus Blech bestehen. Hierdurch lässt sich eine besonderes einfache konstruktive Ausgestaltung der Mischvorrichtung verwirklichen.

Weitere Merkmale, Einzelheiten und Vorteile der Erfindung werden anhand eines in der Zeichnung dargestellten Ausführungsbeispiels näher erläutert. Es zeigen:
- Figur 1:: eine perspektivische Anordnung der Mischvorrichtung mit den Zu- führ- und Abführleitungen,
- Figur 2:: eine Darstellung gemäß Figur 1 in aufgeschnittener Form,
- Figuren 3 - 5:: andere perspektivische Darstellungen entsprechend Figur 1 in auf- geschnittener Form,
- Figur 6:: eine schematische Ansicht der prinzipiellen Wirkungsweise der Mischvorrichtung gemäß der vorliegenden Erfindung,
- Figur 7:: eine perspektivisch dargestellte Anordnung der Mischvorrichtung nach einer zweiten Ausführungsfom der Erfindung,
- Figur 8:: ein Detail der Ausführungsform nach Figur 7,
- Figur 9:: eine perspektivisch dargestellte Anordnung der Mischvorrichtung nach einer dritten Ausführungsform der Erfindung und
- Figur 10:: ein Detail der Ausführungsform nach Figur. 9.

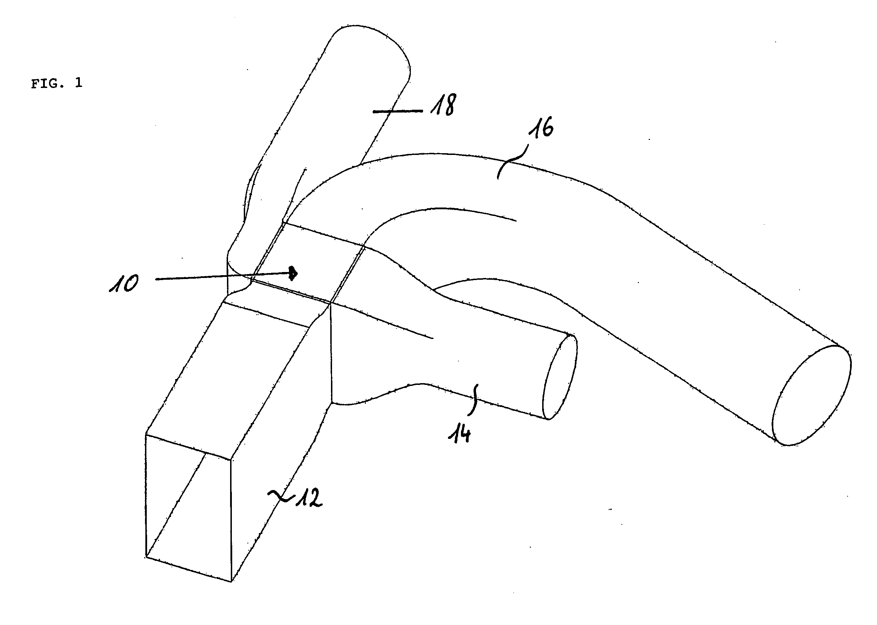

In Figur 1 ist eine Mischvorrichtung 10 mit zwei Zuführleitungen 12 und 14 sowie zwei Abführleitungen 16 und 18 gezeigt. Bei der Zuführleitung 12 handelt es sich um die erste Zuführleitung für Frischluft von einer hier nicht näher dargestellten Klimaanlage. Bei der zweiten Zuführleitung 14 handelt es sich um eine Zuführleitung für zurückgeführte Luft aus der hier nicht näher dargestellten Flugzeugkabine. Bei der ersten Abführleitung 16 handelt es sich um eine Abführleitung zur Zuführung gemischter Luft in die Flugzeugkabine und bei der zweiten Abführleitung 18 handelt es sich um eine Abführleitung zur Zuführung von Frischluft in das hier nicht näher dargestellte Cockpit.

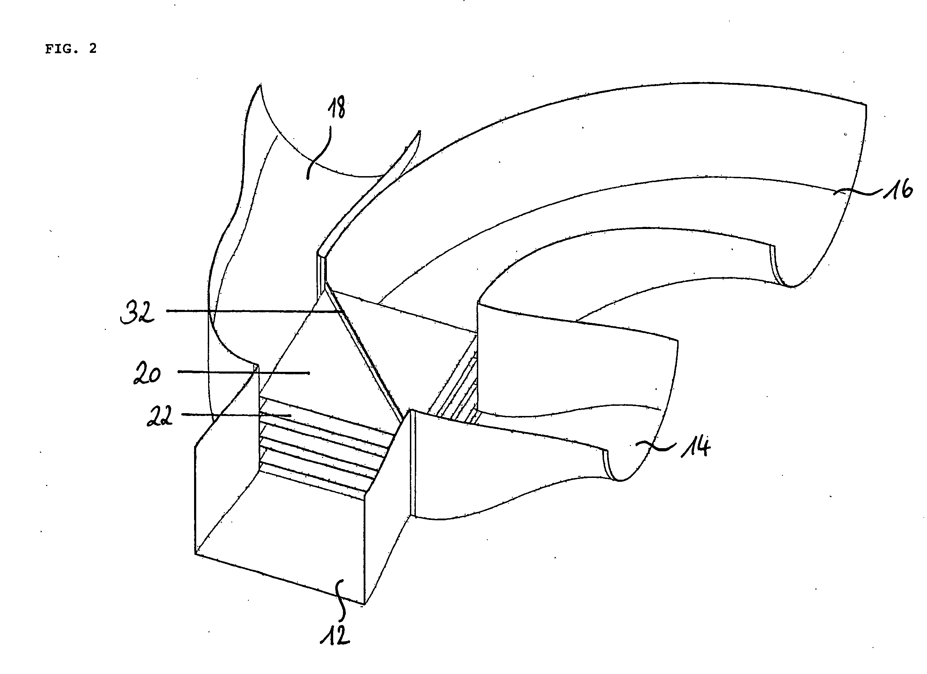

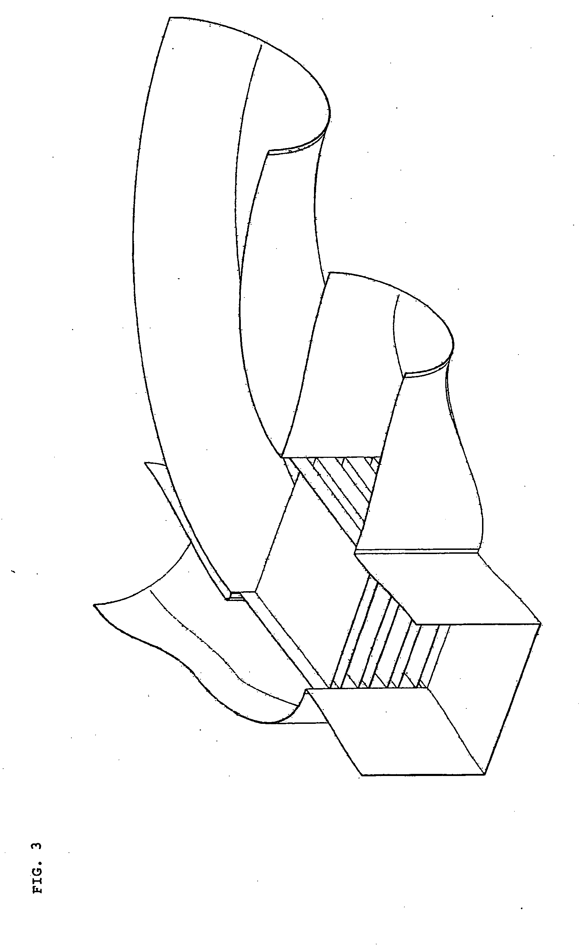

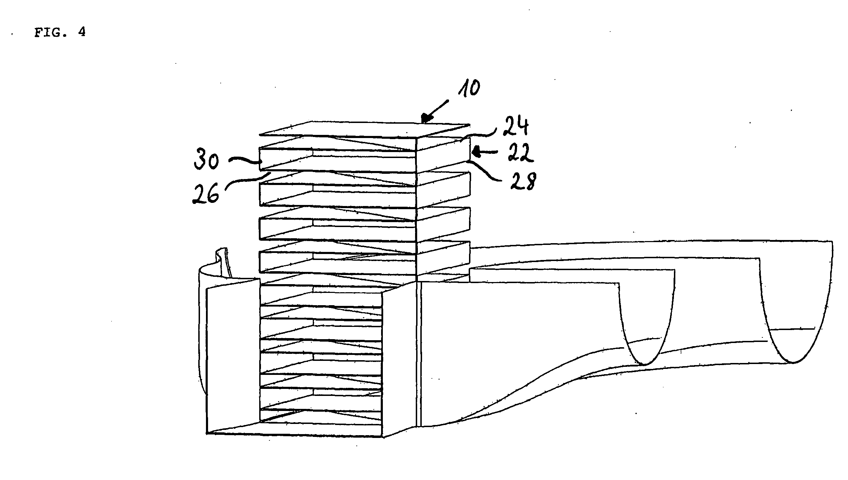

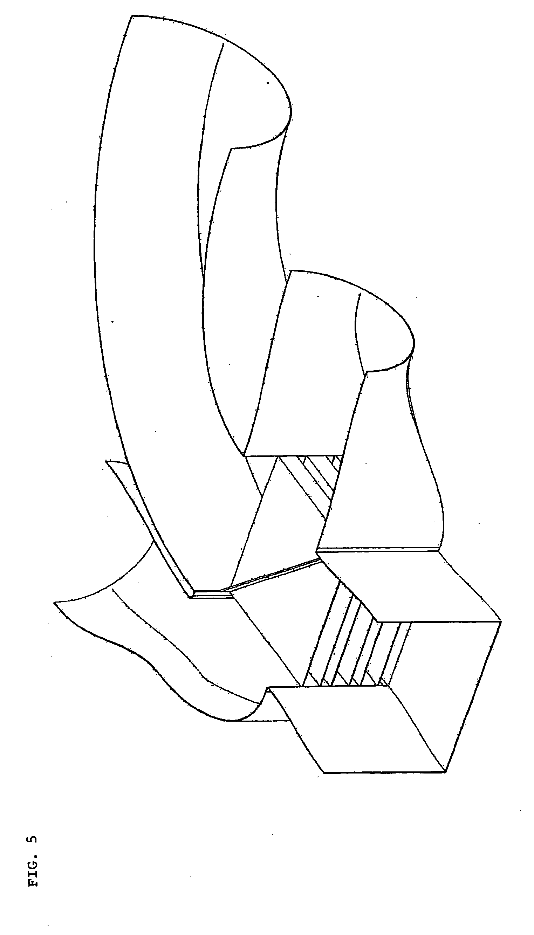

Wie sich bereits aus der Figur 1 und im Detail dann aus den Figuren 2 bis 5 ergibt, besteht die Mischvorrichtung aus mehreren übereinander angeordneten quadratischen Taschen 20 und 22. Diese Taschen 20 und 22 sind, wie sich insbesondere auch aus der Figur 4 ergibt, sehr schmal ausgelegt. Die Taschen 22 bestehen aus einer Blechkonstruktion mit jeweils einer Decke 24 und einem Boden 26, welche jeweils von gegenüberliegenden Seitenwänden 28 und 30 voneinander getrennt sind. Im vorderen und hinteren Bereich ist der Durchschnittsquerschnitt freigelassen. Diese Taschen 22 sind in der Mischvorrichtung 10 so angeordnet, dass die der ersten Zuführleitung 12 aus der Klimaanlage zuströmende Frischluft ungehindert in die erste Abführleitung 16 zur Zuführung gemischter Luft in die Flugzeugkabine strömen kann. Dagegen wird durch die jeweiligen Seitenwände 28 bzw. 30 das einströmen bzw. abströmen von Luft aus der zweiten Zuführleitung zugeführte Luft aus der Flugzeugkabine bzw. die Abführleitung 18 zur Zuführung von Frischluft in das Cockpit verhindert.

Die Taschen 20 sind jeweils zwischen zwei Taschen 22 gebildet, wobei die jeweiligen Bodenbleche und Deckbleche der Taschen 22 entsprechend die Boden- und Deckbleche der Taschen 20 bilden. Anstelle der Seitenwände 28 und 30 sind in den Taschen 20 jeweils diagonale Trennwände 32 ausgebildet, wobei der Verlauf der diagonalen Trennwände 32 derart gewählt ist, dass die aus der zweiten Zuführleitung 14 für zurückgeführte Luft aus der Flugzeugkabine einströmende Luft in die Tasche 20 eintreten kann und durch die Trennwand 32 um ca. 90° umgelenkt wird, so dass sie in die erste Abführleitung 16 zur Zuführung gemischter Luft in die Flugzeugkabine umgelenkt wird, wie dies sich aus der Figur 2 ergibt. Dagegen wird die aus der ersten Zuführleitung 12 für Frischluft aus der Klimaanlage in die Tasche 20 eintretende Luft durch das diagonale Trennblech 32 derart um ca. 90° abgelenkt, dass es in die zweite Abführleitung 18 zur Zuführung von Frischluft in das Cockpit gelenkt wird. Dadurch, dass sich die Taschen 20 und 22 abwechseln wird also aus der ersten Zuführleitung 12 einströmende kalte Frischluft von der Klimaanlage, die durch die Taschen 22 hindurchtritt und in die erste Abführleitung 16 zur Zuführung gemischter Luft in die Flugzeugkabine strömt mit rezirkulierter Luft aus der Flugzeugkabine, die durch die zweite Zuführleitung 14 einströmt und durch die Taschen 20 geführt wird, vermischt.

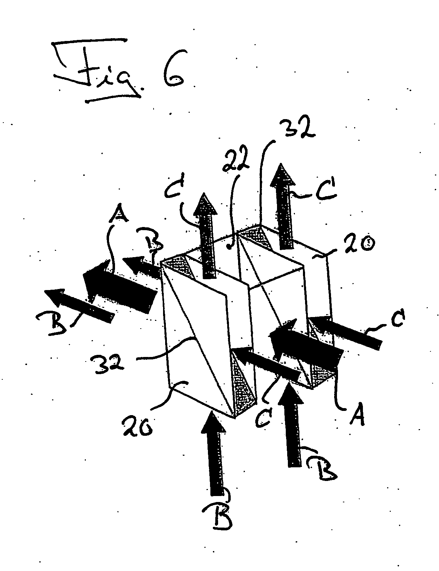

Die Art und Weise der Vermischung der verschiedenen Strömungsanteile ergibt sich aus Figur 6. Dort ist mittig eine Tasche 22 gezeigt, durch die die anhand des Pfeils A dargestellte Frischluft aus der Klimaanlage hindurchtritt. Mit dieser kalten Frischluft A wird rezirkulierte Luft aus der Flugzeugkabine, die hier mit B bezeichnet ist dadurch vermischt, dass diese in die Taschen 20 einströmt und dort mittels des Trennblechs 32 umgelenkt wird. Die aus den Taschen 22 ausströmende Frischluft A und die aus den Taschen 20 ausströmende rezirkulierte Luft B werden dadurch in der ersten Ausströmleitung 16 vermischt. Dagegen wird der Teil der aus der Klimaanlage stammenden Frischluft, der in der Figur 6 mit den Pfeilen C bezeichnet ist, entlang der diagonalen Trennbleche 32 umgelenkt und in die zweite Abführleitung 18 geleitet. Dort kann in hier nicht näher dargestellter Art und Weise zur Verhinderung von Vereisung in dieser Luft noch warme bzw. heiße trim air eingeleitet werden, wie dies aus dem Stand der Technik, beispielsweise der U.S. 6,971,607 B2 bereits bekannt ist.

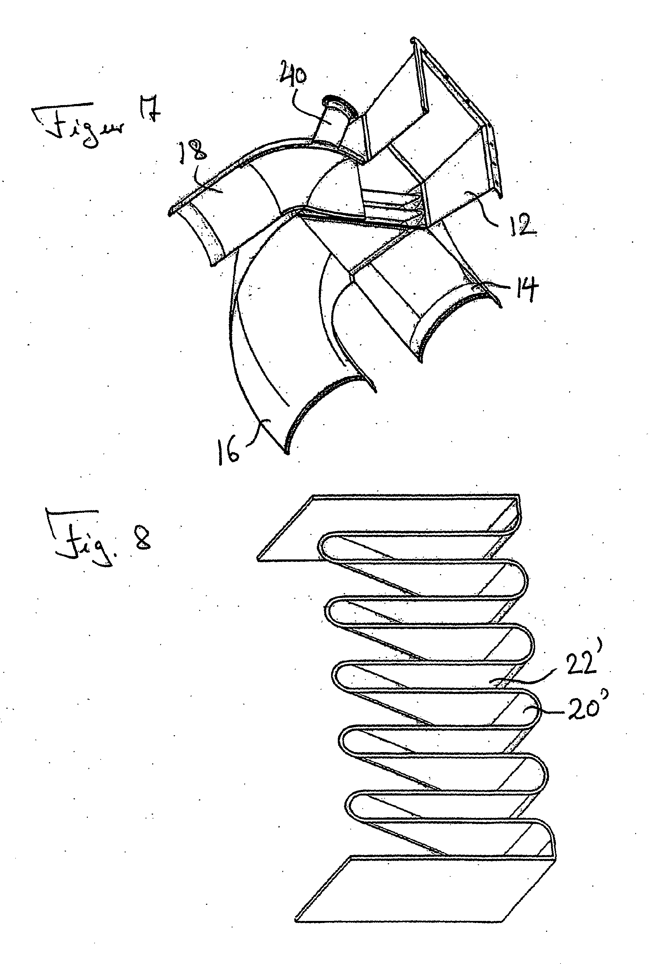

In den Figuren 7 und 8 ist eine zweite Ausführungsform der Erfindung dargestellt. Die hier dargestellte Mischvorrichtung unterscheidet sich von der zuvor beschriebenen Mischvorrichtung im wesentlichen durch die Formgebung der Taschen. Während die Taschen 20 und 22 in der ersten Ausführungsform im wesentlichen quadratisch waren sind die Taschen 20' und 22' in der Ausführungsfom gemäß der Figuren 7 und 8 im wesentlichen dreieckig. In dieser Ausführung kann Material und damit Gewicht gespart werden. Die Funktion entspricht derjenigen der ersten Ausführungsfom, so dass hierauf verwiesen werden kann. Der Einlaß für die heiße trim air in die zweite Abführleitung 18 ist hier mit 40 bezeichnet.

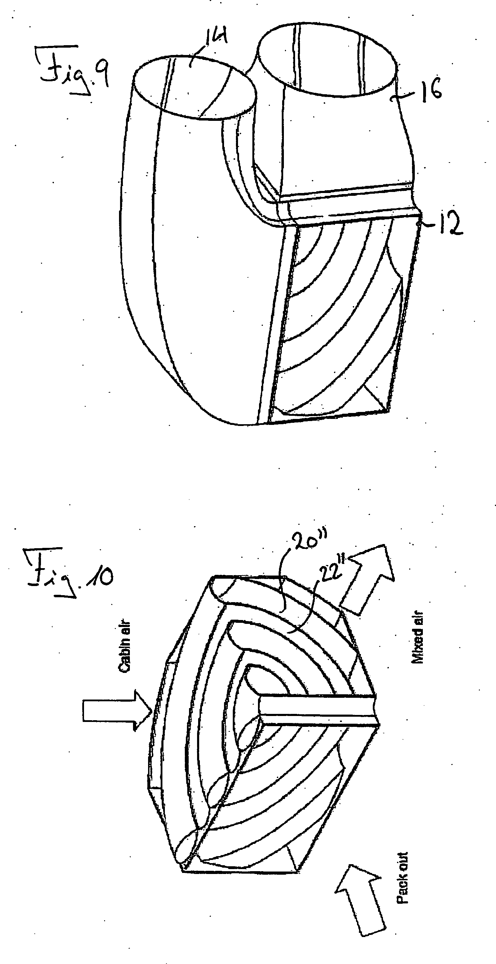

In den Figuren 9 und 10 ist eine vereinfachte Ausführungsform dargestellt. Hier fehlt im Vergleich zu den vorgenannten Ausführungsbeispielen die zweite Abführleitung 18. Die Taschen 20" und 22" sind gewölbt ausgeführt. Hierdurch kann zurückgeführte Luft aus der Flugzeugkabine in sehr kompakter Art und Weise mit Frischluft aus der Klimaanlage gemischt werden.

## Patentansprüche

1. Mischvorrichtung (10) für eine Flugzeugklimaanlage mit einer ersten Zuführleitung (12) für Frischluft von der Klimaanlage, mit einer zweiten Zuführleitung (14) für zurückgeführte Luft aus einem ersten Bereich des Flugzeugs, mit einer Abführleitung (16) zur Zuführung gemischter Luft in den ersten Bereich des Flugzeugs und mit einer Abführleitung (18) zur Zuführung von Frischluft in einen zweiten Bereich des Flugzeugs,
**dadurch gekennzeichnet,**
**dass** die Mischvorrichtung (1) aus im Strömungsquerschnitt übereinander angeordneten Taschen (20, 22) besteht, die zum einen Teil einen freien Querschnitt aufweisen, um die Frischluft von der Klimaanlage aus der ersten Zuführleitung (12) für Frischluft von der Klimaanlage in die Abführleitung (16) zur Zuführung von gemischter Luft in den ersten Bereich des Flugzeugs zu leiten und die zum anderen Teil eine diagonale Trennwand (32) aufweisen, um sowohl die Frischluft von der Klimaanlage in die Abführleitung (18) zur Zuführung von Frischluft in den zweiten Bereich des Flugzeugs wie auch zurückgeführte Luft aus dem ersten Bereich des Flugzeugs in die Abführleitung (16) zur Zuführung von gemischter Luft im ersten Bereich des Flugzeugs zu leiten.

2. Mischvorrichtung (10) nach Anspruch 1, **dadurch gekennzeichnet, dass** der erste Bereich des Flugzeugs die Flugzeugkabine und der zweite Bereich des Flugzeugs das Cockpit ist.

3. Mischvorrichtung (10) nach Anspruch 1 oder 2, **dadurch gekennzeichnet, dass** die unterschiedlich aufgebauten Taschen (20, 22) in mehreren Lagen abwechselnd übereinander angeordnet sind.

4. Mischvorrichtung (10) nach Anspruch 1, 2 oder 3, **dadurch gekennzeichnet, dass** 10 bis 20 Taschen (20, 22) übereinander angeordnet sind.

5. Mischvorrichtung (10) nach Anspruch 1, 2 oder 3, **dadurch gekennzeichnet, dass** in die Abführleitung (18) zur Zuführung von Frischluft in die Flugzeugkabine zusätzlich aus der Klimaanlage abgezweigte heiße Prozeßluft (trim air) zugemischt wird.

6. Mischvorrichtung (10) nach einem der Ansprüche 1 bis 5, **dadurch gekennzeichnet, dass** die Taschen (20, 22) eine quadratische Grundfläche aufweisen.

7. Mischvorrichtung (10) nach einem der Ansprüche 1 bis 5, **dadurch gekennzeichnet, dass** die Taschen (20, 22) eine im wesentlichen dreieckige Grundfläche aufweisen.

8. Mischvorrichtung (10) nach einem der Ansprüche 1 bis 7, **dadurch gekennzeichnet, dass** die Taschen (20, 22) aus Blech bestehen.

## Claims

1. Mixing device (10) for an aircraft air-conditioning system with a first supply line (12) for fresh air from the air-conditioning system, with a second supply line (14) for recycled air from a first region of the aircraft, with a removal line (16) for supplying mixed air into the first region of the aircraft, and with a removal line (18) for supplying fresh air into a second region of the aircraft, **characterized in that** the mixing device (1) consists of pockets (20, 22) which are arranged one above another in the flow cross section, some of which have a free cross section, in order to conduct the fresh air from the air-conditioning system out of the first supply line (12) for fresh air from the air-conditioning system into the removal line (16) for supplying mixed air into the first region of the aircraft, and others of which have a diagonal partition (32), in order both to conduct the fresh air from the air-conditioning system into the removal line (18) for supplying fresh air into the second region of the aircraft and also recycled air from the first region of the aircraft into the removal line (16) for supplying mixed air in the first region of the aircraft.

2. Mixing device (10) according to Claim 1, **characterized in that** the first region of the aircraft is the aircraft cabin and the second region of the aircraft is the cockpit.

3. Mixing device (10) according to Claim 1 or 2, **characterized in that** the differently constructed pockets (20, 22) are arranged in a plurality of layers one above another in an alternating manner.

4. Mixing device (10) according to Claim 1, 2 or 3, **characterized in that** 10 to 20 pockets (20, 22) are arranged one above another.

5. Mixing device (10) according to Claim 1, 2 or 3, **characterized in that** hot trim air branched off from the air-conditioning system is additionally added into the removal line (18) for supplying fresh air into the aircraft cabin.

6. Mixing device (10) according to one of Claims 1 to 5, **characterized in that** the pockets (20, 22) have a square base.

7. Mixing device (10) according to one of Claims 1 to 5, **characterized in that** the pockets (20, 22) have a substantially triangular base.

8. Mixing device (10) according to one of Claims 1 to 7, **characterized in that** the pockets (20, 22) are composed of sheet metal.

## Revendications

1. Dispositif de mélange (10) pour une installation de climatisation d'avion, avec une première conduite d'amenée (12) pour de l'air frais de l'installation de climatisation, avec une deuxième conduite d'amenée (14) pour l'air renvoyé d'une première zone de l'avion, avec une conduite d'évacuation (16) pour l'amenée d'air mélangé dans la première zone de l'avion et avec une conduite d'évacuation (18) pour l'amenée d'air frais dans une deuxième zone de l'avion,
**caractérisé en ce que** le dispositif de mélange (2) est constitué de poches (20, 22) disposées dans la section transversale d'écoulement les unes au-dessus des autres, qui présente, d'une part, une section transversale libre pour guider l'air frais de l'installation de climatisation de la première conduite d'amenée (12) d'air frais depuis l'installation de climatisation dans la conduite d'évacuation (16) pour l'amenée d'air mélangé dans la première zone de l'avion, et qui présente, d'autre part, une paroi de séparation diagonale (32) pour guider à la fois l'air frais de l'installation de climatisation dans la conduite d'évacuation (18) pour l'amenée d'air frais dans la deuxième zone de l'avion, comme aussi l'air ramené de la première zone de l'avion dans la conduite d'évacuation (16) pour l'amenée d'air mélangé dans la première zone de l'avion.

2. Dispositif de mélange (10) selon la revendication 1, **caractérisé en ce que** la première zone de l'avion est la cabine de l'avion, et la deuxième zone de l'avion est le cockpit.

3. Dispositif de mélange (10) selon la revendication 1 ou 2, **caractérisé en ce que** les poches (20, 22) constituées différemment sont disposées en plusieurs couches alternativement les unes au-dessus des autres.

4. Dispositif de mélange (10) selon la revendication 1, 2 ou 3, **caractérisé en ce que** 10 à 20 poches (20, 22) sont disposées les unes au-dessus des autres.

5. Dispositif de mélange (10) selon la revendication 1, 2 ou 3, **caractérisé en ce qu'**est ajoutée dans la conduite d'évacuation (18) pour l'amenée d'air frais dans la cabine de l'avion additionnellement de l'air d'équilibrage chaud (trim air) dérivé de l'installation de climatisation.

6. Dispositif de mélange (10) selon l'une des revendications 1 à 5, **caractérisé en ce que** les poches (20, 22) présentent une face de base carrée.

7. Dispositif de mélange (10) selon l'une des revendications 1 à 5, **caractérisé en ce que** les poches (20, 22) présentent une face de base sensiblement triangulaire.

8. Dispositif de mélange (10) selon l'une des revendications 1 à 7, **caractérisé en ce que** les poches (20, 22) sont en tôle.
